(19) Europäisches Patentamt
European Patent Office
Office européen des brevets

(11) **EP 4 545 896 B1**

(12) # FASCICULE DE BREVET EUROPEEN

(45) Date de publication et mention de la délivrance du brevet:
**04.02.2026 Bulletin 2026/06**

(21) Numéro de dépôt: **24208401.0**

(22) Date de dépôt: **23.10.2024**

(51) Classification Internationale des Brevets (IPC):
*F28F 1/32* *(2006.01)*

(52) Classification Coopérative des Brevets (CPC):
**F28D 20/021; F28F 1/32; F28F 1/325; F28F 1/36;**
F28D 7/16; F28D 2020/0078; Y02E 60/14

(54) **SYSTÈME DE STOCKAGE THERMIQUE À MCP OPTIMISÉ ET SON PROCÉDÉ D' ASSEMBLAGE**

OPTIMIERTES WÄRMESPEICHERSYSTEM UND DESSEN HERSTELLUNGSVERFAHREN

OPTIMIZED HEAT STORAGE SYSTEM AND PROCESS OF ASSEMBLY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.10.2023 FR 2311574**

(43) Date de publication de la demande:
**30.04.2025 Bulletin 2025/18**

(73) Titulaire: **Commissariat à l'Energie Atomique et aux Energies Alternatives**
**75015 Paris (FR)**

(72) Inventeur: **VESIN, Sébastien**
**38054 GRENOBLE Cedex 09 (FR)**

(74) Mandataire: **Hautier IP**
**20, rue de la Liberté**
**06000 Nice (FR)**

(56) Documents cités:
**EP-A1- 3 175 196    EP-A1- 3 214 398**
**EP-A1- 3 274 642**

- **ZONOUZI SAJJAD AHANGAR ET AL: "Numerical investigation of using helical fins for the enhancement of the charging process of a latent heat thermal energy storage system", JOURNAL OF ENERGY STORAGE, ELSEVIER BV, NL, vol. 49, 11 February 2022 (2022-02-11), XP087029797, ISSN: 2352-152X, [retrieved on 20220211], DOI: 10.1016/J.EST.2022.104157**

## Description

### DOMAINE TECHNIQUE

La présente concerne un système de stockage thermique à MCP muni d'un échangeur à fluide caloporteur et son procédé d'assemblage. En particulier, la présente invention se rapporte à un système de stockage thermique tel que défini par le préambule de la revendication 1, et tel qu'illustré par le document EP 3 274 642A.

Le domaine de l'invention concerne les Systèmes de Stockage Thermiques (SST) par Matériaux à Changement de Phase (MCP) ; et plus particulièrement, l'intégration d'un échangeur de chaleur à géométrie optimisée.

L'invention trouvera notamment son application dans les réseaux électriques et de chaleur urbains ou ruraux. L'invention pourra également trouver des applications dans le développement des réseaux « smartgrid » électriques et thermiques, ainsi que dans les interactions entre ces réseaux.

L'invention trouvera notamment son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) ou encore dans le management thermique de systèmes embarqués (batteries électriques) ou stationnaires. L'invention pourrait être mise en œuvre suivant une première application dans les sous-stations des réseaux de chaleur, qui présentent un enjeu important de compacité et offrent une réplication potentielle importante (plusieurs dizaines de milliers de sous-stations en France). Suivant une seconde application, l'invention pourrait être mise en œuvre pour le stockage de l'énergie thermique de la vapeur par la chaleur latente du MCP.

### ETAT DE LA TECHNIQUE

Les réseaux de chaleur sont constitués d'au moins une source de chaleur (centrale thermique, panneaux solaires thermiques, source géothermique,...), d'un réseau de fluide permettant le transport des calories aux usagers par l'intermédiaire d'un fluide caloporteur et éventuellement d'un réseau de retour. Chaque poste de livraison de calories correspond en un échangeur de chaleur permettant le transfert thermique du circuit primaire (réseau relié à la source de chaleur) à un circuit secondaire ; ce second circuit est la propriété de l'abonné et est parcouru par de l'eau chaude (<100°C). Cet échangeur est le point de livraison de l'énergie thermique, on appelle l'ensemble échangeur, compteur, et les différents jeux de vannes : une sous-station.

La charge d'un réseau de chaleur est très fluctuante, en moyenne sur l'année les unités de production fonctionnent à 25% de leur capacité, en général, les pics de consommation sont 3 à 4 fois plus importants que la charge moyenne annuelle. Ces pics (matin, soir) représentent environ 30% de la consommation thermique d'une journée de chauffe typique. Les générateurs d'appoints (et de secours) sont généralement des centrales thermiques au fioul lourd, au gaz naturel ou au charbon, polluantes et pas toujours bon marché. L'utilisation d'un système de stockage thermique qui emmagasinerait des calories pendant que la demande est basse et les réinjecterait sur le réseau pendant les pics de consommations pourrait pallier ce problème.

Le stockage thermique peut être réalisé par stockage par enthalpie de changement d'état. Dans ce cas le stockage se fait via le changement de phase d'un matériau à changement de phase. C'est l'enthalpie de changement de phase, le plus souvent lors du changement d'état solide/liquide, qui est stockée. Cette énergie, qui est par exemple absorbée lors de la fusion et libérée lors de la solidification, résulte de l'établissement, ou de la rupture, de liaisons interatomiques ou intermoléculaires. Couramment, la charge du système de stockage s'accompagne de la fusion du matériau de stockage, tandis que la décharge est réalisée par la solidification dudit matériau. Le matériau doit être judicieusement choisi en fonction de la température cible du système de stockage, afin que sa température de fusion soit dans la plage de température d'utilisation.

La quantité d'énergie thermique stockée au cours du changement de phase s'exprime avec la relation suivante :

$$\triangle Q = m \cdot h$$

M: Masse [kg]
h : Enthalpie massique de changement de phase solide-liquide [kJ/kg]

Un des avantages majeurs de cette technologie est que le changement de phase peut se faire à pression et température constantes. Par conséquent, la décharge de l'énergie stockée se fait à température constante.

L'enthalpie de changement de phase est relativement importante en comparaison de la variation d'énergie sensible d'un matériau. Par exemple, l'énergie stockée dans la fusion d'un bloc de paraffine (passage de 34 à 36°C pour la RT35HC de Rubitherm®) est équivalente à l'énergie stockée dans cette même quantité de paraffine si on la chauffe de 120°C.

Par conséquent, les systèmes de stockage avec un Matériau à Changement de Phase (MCP) sont intéressants car la quantité d'énergie stockée par unité de volume est supérieure à celle obtenue par un système sensible (meilleure densité volumique d'énergie stockée). De ce fait les volumes de stockage et de matériaux sont réduits, ce qui diminue le prix du système, et limite les pertes thermiques qui sont proportionnelles à la surface extérieure du réservoir.

Le stockage thermique s'est récemment développé autour des centrales solaires thermodynamiques afin de pallier l'intermittence de la ressource solaire. Aujourd'hui, la thématique du stockage thermique concerne également l'habitat, les réseaux de chaleur urbains et l'industrie.

On connaît notamment la technologie d'échangeur tubes - calandre. Une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique, cette technologie est adaptée, il n'y a plus échange entre deux fluides en mouvement, mais entre un fluide caloporteur qui circule dans les tubes et un MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de solidification du MCP et récupère l'énergie précédemment stockée, ce qui entraine la solidification du MCP.

Classiquement, les tubes sont entourés d'ailettes circulaires augmentant la surface d'échange thermique ou bien d'inserts de plus grandes dimensions.

Toutefois, dans ces systèmes tubes-calandre la conductivité reste faible du fait du MCP et des distances entre les tubes générant des zones mortes, c'est-à-dire des zones éloignées des ailettes. En effet, le diamètre maximal des ailettes reste faible, de l'ordre de 55mm, ce qui conduit à utiliser beaucoup de tubes à ailettes dans un stockage de chaleur latente, pour diffuser la chaleur au sein du MCP. Cet inconvénient augmente considérablement le coût final du stockage de chaleur latente. De plus, le nombre important d'assemblages des tubes à ailettes sur les plaques collectrices supérieures et inférieures (souvent réalisé par soudage ou dudgeonnage) génère une contrainte de plus sur le coût du système. Enfin, la très faible vitesse d'écoulement du fluide caloporteur dans les tubes, compte tenu du faible débit partiel du fluide caloporteur circulant dans chaque tube, implique une réduction des échanges thermiques qui nécessite d'avoir recours à des solutions comme l'ajout d'inserts hydrauliques internes dans les tubes, ce qui entraine un surcoût conséquent consécutif à l'achat et à l'assemblage de ces inserts (pouvant être réalisé par brasage, sertissage) dans les tubes à ailettes.

De plus, les contraintes mécaniques engendrées par l'expansion volumique du MCP lors de sa fusion des MCP solide-liquide peuvent être particulièrement fortes; si la fusion du MCP commence en bas du réservoir et qu'une couche reste entièrement solide au-dessus du fait des zones mortes, la montée en pression de la poche liquide peut provoquer la déformation des ailettes, voire la rupture du réservoir. Avec les inserts, certains de ces inconvénients sont limités, cependant la présence de jeu entre les ailettes et les inserts pénalise le transfert thermique et leur mise en œuvre reste complexe en nécessitant un assemblage long et minutieux entrainant des coûts élevés.

Il existe donc le besoin de proposer un dispositif permettant des transferts thermiques conducteurs et convectifs améliorés tout en étant de conception aisée et peu coûteuse.

## RESUME

Pour atteindre cet objectif, selon un mode de réalisation on prévoit un système de stockage thermique (SST) par matériau à changement de phase (MCP) comprenant une enceinte destinée à contenir un MCP et un échangeur thermique à fluide caloporteur agencé au moins partiellement dans l'enceinte en contact du MCP, l'échangeur thermique comprenant un faisceau de tubes parallèles destinés à recevoir un fluide caloporteur, chaque tube comprenant à sa surface au moins une ailette hélicoïdale enroulée hélicoïdalement suivant un axe longitudinal suivant lequel s'étend le tube caractérisé en ce que le système comprend des plaques comprenant chacune pour chaque tube une ouverture au travers de laquelle est disposé un tube, et en ce que le diamètre des ouvertures est inférieur au diamètre externe maximal de l'ailette hélicoïdale.

Ce SST augmente considérablement la surface d'échange thermique entre le MCP et le fluide caloporteur circulant dans les tubes. De plus, cette disposition permet d'insérer au moins une partie des ailettes, au moins leur extrémité à l'intérieur du volume formé entre les plaques empilées et occupé par le MCP. De plus, l'optimisation de l'agencement entre les plaques et les ailettes hélicoïdales qui peuvent être avantageusement en contact optimum permet d'assurer une conductivité thermique améliorée. Les ailettes hélicoïdales assurent la possibilité d'assembler les tubes dans les ouvertures des plaques par vissage.

Cette conception de SST permet au front de fusion ou de solidification suivant la phase d'utilisation du SST (charge ou décharge) de ne pas traverser un volume occupé uniquement par du MCP, présentant une faible conductivité thermique.

Le SST selon l'invention présent des surfaces d'échanges thermiques optimisées et qui ne sont pas limitées dans le type de matériaux. Le SST est ainsi obtenu grâce à des procédés et des moyens industriels peu couteux.

Selon un autre aspect, l'invention concerne un procédé d'assemblage d'un SST tel que décrit ci-dessus comprenant les étapes successives suivantes:- empilement des plaques les unes sur les autres en alignant les ouvertures pour former une cassette de plaques, - insertion par vissage des tubes dans les ouvertures des plaques, - assemblage des extrémités des tubes à des collecteurs, - mise dans l'enceinte de l'échangeur thermique.

L'assemblage est ainsi très rapide et facile.

## BREVE DESCRIPTION DES FIGURES

Les buts, objets, ainsi que les caractéristiques et avantages de l'invention ressortiront mieux de la description détaillée d'un mode de réalisation de cette dernière qui est illustrée par les dessins d'accompagnement suivants dans lesquels :

La figure 1 représente une vue en perspective d'un tube à ailette hélicoïdale selon un mode de réalisation utilisé dans le SST selon l'invention.

La figure 2A représente une vue en perspective d'une plaque selon un mode de réalisation utilisé dans le SST selon l'invention.

La figure 2B représente une vue en perspective d'une plaque selon un autre mode de réalisation utilisé dans le SST selon l'invention dans lequel l'ouverture présente une fente.

La figure 3 représente une vue en coupe de l'assemblage d'un tube à ailette hélicoïdale au sein d'une cassette de plaques formée ici par deux plaques.

La figure 4 représente une vue en coupe de l'assemblage d'un faisceau de tubes à ailette hélicoïdale dont deux tubes sont ici représentés au sein d'une cassette de plaques formée ici par deux plaques.

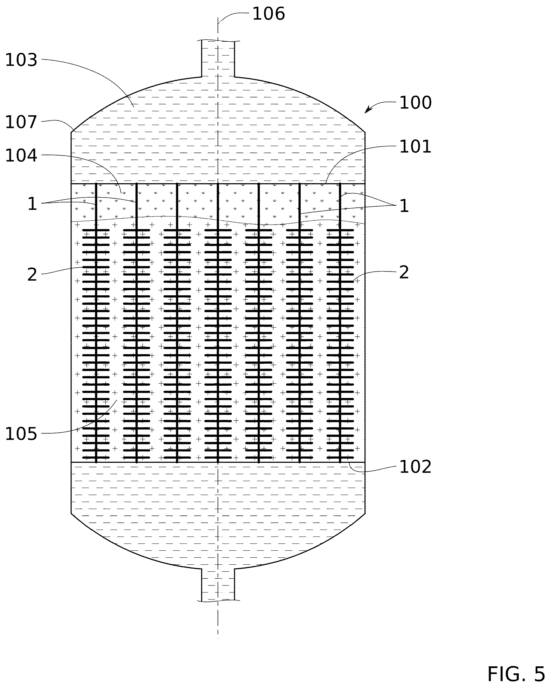

La figure 5 représente une vue en coupe d'un SST selon l'état de la technique comprenant un faisceau de tubes avec des ailettes horizontales.

Les dessins sont donnés à titre d'exemples et ne sont pas limitatifs de l'invention. Ils constituent des représentations schématiques de principe destinés à faciliter la compréhension de l'invention et ne sont pas nécessairement à l'échelle des applications pratiques.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

- Selon un exemple, les plaques 50 comprennent des reliefs 51 faisant saillie au-dessus et/ou en-dessous d'un plan de plaque 56 s'étendant suivant une direction longitudinale d'extension des plaques ;
- Selon un exemple, les plaques 50 sont empilées les unes sur les autres avec les ouvertures 52 alignées les unes aux autres pour former une cassette de plaques et les reliefs 51 sont configurés pour faire office d'espaceurs de plaques permettant aux plaques 50 d'être empilées les unes sur les autres en contact en maintenant entre deux plaques 50 juxtaposées un espace 59 ; L'invention permet grâce à la superposition des plaques en contact l'une de l'autre de maintenir l'empilement par leurs reliefs sans nécessiter de moyens de fixation additionnels des plaques sur les tubes. Chaque plaque repose sur une plaque inférieure par les reliefs. De plus, les reliefs augmentent la surface d'échange des plaques et améliorent ainsi les performances de transfert thermique. Les reliefs permettent également lorsqu'ils sont réalisés avec enlèvement de matière de laisser remonter librement le MCP fondu entre les plaques.

- Selon un exemple, les plaques 50 s'étendant suivant une même direction longitudinale oblique, préférentiellement perpendiculaire, à l'axe longitudinal 3 des tubes 1 ; Préférentiellement, les plaques 50 sont parallèles les unes aux autres.
- Selon un exemple, les ouvertures 52 comprennent une fente 61 configurée pour laisser passer l'ailette hélicoïdale 2 du tube 1 dans l'ouverture 52 de la plaque 50 ;
- Selon un exemple, la fente 61 présente une profondeur 62 au moins égale à la moitié de la différence entre le diamètre externe maximal 7 de l'ailette hélicoïdale 2 et le diamètre 57 de l'ouverture 52 ;
- Selon un exemple, la fente 61 présente une largeur 63 au moins égale à l'épaisseur 17 de l'ailette hélicoïdale 2 au regard du pourtour de l'ouverture 52 ; La présence de la fente permet de faciliter l'insertion d'un tube dans la plaque et plus préférentiellement dans les plaques tout en ayant avantageusement le tube centré dans l'ouverture. L'épaisseur 17 de l'ailette correspond avantageusement à l'épaisseur au niveau du rayon d'insertion ;
- Selon un exemple, les tubes 1 du faisceau de tubes comprennent au moins une portion d'extrémité 5 par laquelle le tube est introduit dans les ouvertures 52 des plaques 50 et qui est dépourvue d'ailette hélicoïdale 2. Préférentiellement, le tube comprend une portion d'extrémité opposée à l'extrémité d'insertion qui est dépourvue d'ailette ;
- Selon un exemple, l'ailette hélicoïdale 2 présente un diamètre externe maximal 7 décroissant en direction de son extrémité agencée à une extrémité d'insertion 4 du tube 1 par laquelle le tube 1 est introduit dans les ouvertures 52 des plaques 50 ; Cette disposition permet de réduire le diamètre du trou dans les plaques matricées pour le passage du tube et ainsi favoriser le centrage et le calage du tube ;
- Selon un exemple, le diamètre 57 des ouvertures 52 est au moins égal ou supérieur au diamètre externe 6 des tubes 1. On entend par diamètre externe du tube, le diamètre extérieur du tube en lui-même sans l'ailette ;
- Selon un exemple, la plaque 50 présente une épaisseur 60 inférieure ou égale au pas 9 de l'ailette hélicoïdale 2, préférentiellement à la hauteur 16 libre entre deux bases successives de l'ailette hélicoïdale 2 ;
- Selon un exemple, les tubes (1) du faisceau de tubes comprennent à une extrémité d'insertion 4 du tube 1 par laquelle le tube 1 est introduit dans les ouvertures 52 des plaques 50, une empreinte destinée à coopérer avec un outil d'entrainement pour le vissage des tubes dans les ouvertures 52 des plaques 50 et configurée pour être supprimée après que le tube 1 ait été vissé dans les plaques 50 ;

- Selon un exemple, les plaques 52 sont ajourées ; avantageusement, de sorte à permettre une meilleure circulation d'un fluide circulant autour de l'échangeur. Préférentiellement, les plaques sont ajourées sans enlèvement de matière. Ceci permet encore d'augmenter la surface d'échange des plaques.

Pour la suite de la description, on entend par 'haut' et 'bas', ou leurs dérivés, une qualité de positionnement relatif au SST ou d'un élément du SST lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas.

On entend par vertical ce qui est parallèle à la direction de la pesanteur donnée notamment par le fil à plomb et horizontal ce qui est perpendiculaire à la verticale. Le haut et le bas étant opposés verticalement.

On entend par horizontal ce qui est perpendiculaire à la verticale.

On entend par axe longitudinal, l'axe parallèle à la direction d'extension principale. On entend par transversale, une direction perpendiculaire à une direction longitudinale. Une coupe transversale est une coupe perpendiculaire à l'axe longitudinal.

L'épaisseur est généralement mesurée selon une direction perpendiculaire au plan d'extension principal.

Aux fins de la présente divulgation, l'expression « A et/ou B » signifie (A), (B) ou (A et B). Aux fins de la présente divulgation, l'expression "A, B et/ou C" signifie (A), (B), (C), (A et B), (A et C), (B et C), ou (A, B et C).

Le SST 100 selon l'invention comprend une enceinte 107 et un échangeur.

L'enceinte 107 est classiquement d'une forme cylindrique dont les parois sont formées de matériau métallique résistant aux variations de pression et de température. À titre d'exemple, l'enceinte 107 est en acier au carbone de construction. Les nuances classiques pour une enceinte sous pression sont P235GH, P265GH, P355GH. En présence de risque d'oxydation ou de corrosion, des aciers austénitiques inoxydables 304, 316 peuvent être utilisés. L'enceinte peut être réalisée en une seule pièce, en deux demi-cylindres soudés, ou encore par superposition de viroles.

L'enceinte 107 est configurée pour recevoir un MCP.

Le MCP est placé directement dans l'enceinte 107 et l'échangeur plonge dans ledit MCP.

L'enceinte 107 contient au moins un MCP. Il peut être utilisé des mélanges de MCP. Dans la suite de la description, la référence à un MCP n'est pas limitative. Différents MCP peuvent être utilisés, notamment les MCP à transition solide/solide ou préférentiellement les MCP à transition solide/liquide. L'invention est adaptée à une vaste variété de MCP et donc à une large gamme de température de stockage. Les deux grandes catégories de MCP pouvant être utilisés sont les organiques (paraffines, alcools gras, acides gras, alcools de sucre...) et les inorganiques (hydrates de sel, alliages métalliques,...). Il est préféré de cibler un matériau qui ne s'oxyde pas et qui n'oxyde pas la structure métallique de l'échangeur ou de l'enceinte 107, qui ait une bonne enthalpie massique de changement de phase et qui ne soit pas toxique. De préférence, le MCP aura une bonne capacité calorifique et une conductivité thermique la plus élevée possible. Selon une possibilité, l'enceintes 107 comprend au-dessus du MCP 105 gaz 104.

Le MCP est un matériau à deux phases préférentiellement solide et liquide dont le passage entre ces deux phases stocke ou libère de l'énergie. Préférentiellement, le passage d'une première phase à une deuxième phase va nécessiter de la chaleur qui est donc stockée dans le MCP dans sa deuxième phase. A contrario, le passage de la deuxième phase à la première phase est exothermique et libère la chaleur stockée.

L'échangeur 107 selon l'invention est un échangeur d'énergie thermique par fluide caloporteur. L'échangeur 107 est configuré pour recevoir un fluide caloporteur 103 et avantageusement permettre sa circulation.

L'échangeur 107 comprend des tubes 1, préférentiellement dénommés faisceau de tubes, et des plaques 50. Les tubes sont configurés pour recevoir le fluide caloporteur 103.

Les plaques 50 comprennent des ouvertures 52 pour tubes 1 au travers desquelles sont agencés les tubes 1.

Le fluide caloporteur est classiquement de l'eau, ou de la vapeur, ou tout autre fluide présentant des propriétés caloporteuses peut être utilisé par exemple une huile thermique telle que le polychlorobiphényle (therminol®) ou un mélange d'isomères de (di)benzyltoluène (Jarytherm®).

Les tubes 1 sont reliés à un circuit fluidique de fluide caloporteur. Une première extrémité des tubes 1 constitue l'entrée du fluide caloporteur tandis que l'autre extrémité constitue la sortie du fluide caloporteur. La direction de circulation du fluide n'est pas unique, le fluide peut, selon que l'on est en charge ou en décharge, circuler dans une direction ou dans l'autre. Dans la description qui suit, le cas considéré est une charge. La description est faite pour un stockage de chaleur à température positive, il est à noter qu'elle est également valide pour le stockage de froid avec un MCP qui peut être alors de l'eau. Dans ce cas-là, les contraintes mécaniques sont plus fortes lors de la solidification de l'eau, du fait de sa masse volumique plus élevée à l'état liquide qu'à l'état solide, contrairement à la majorité des MCP utilisés pour du stockage de chaleur latente à températures positives.

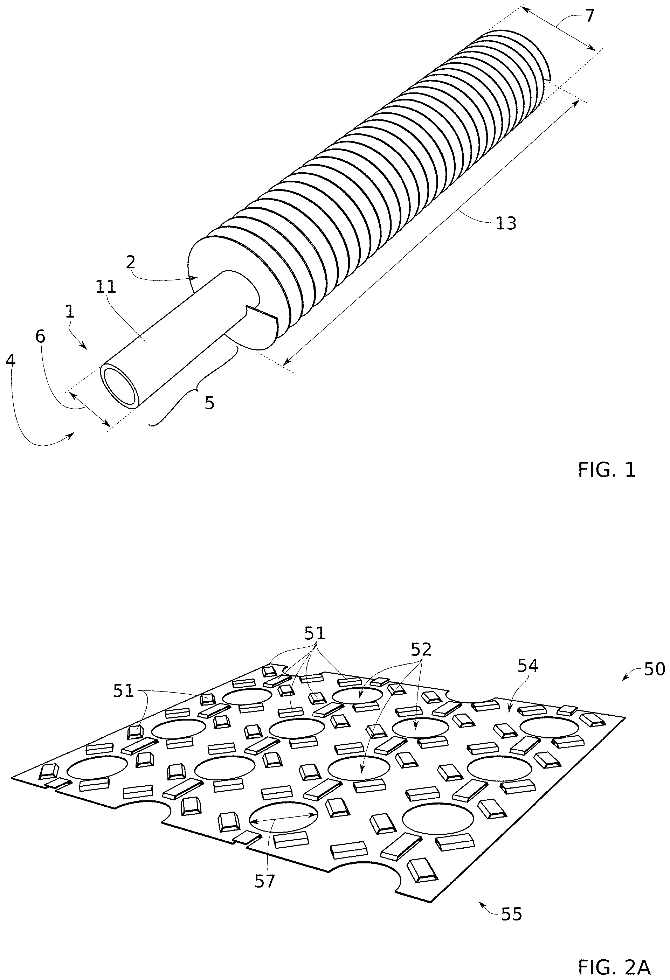

Le raccordement hydraulique des tubes 1 peut se faire via des nourrices, une plaque tubulaire, une boîte à eau, un divergent conique,... En figure 1 est représenté un collecteur supérieur 101 et un collecteur inférieur 102.

Le système peut comprendre une pluralité d'échangeurs agencés dans une enceinte 107.

Lorsque le SST fonctionne pour stocker de l'énergie thermique, l'échangeur apporte de la chaleur dans l'enceinte, il y a un échange de chaleur du fluide caloporteur vers le MCP au travers de l'échangeur. Cette chaleur va permettre la transformation du MCP de la première phase à la deuxième phase qui stockera alors la chaleur issue du fluide caloporteur. Lorsque le dispositif fonctionne pour restituer de l'énergie thermique, l'échangeur refroidit le MCP, il y a un échange de chaleur du MCP vers le fluide caloporteur au travers de l'échangeur, ce qui permet le passage de la deuxième phase à la première phase. Cette transformation est exothermique. La chaleur libérée est récupérée par le fluide caloporteur.

Les tubes 1 de l'échangeur sont avantageusement agencés en faisceau de tubes. Les tubes 1 sont agencés parallèlement les uns aux autres. Selon une possibilité, les tubes sont disposés verticalement et préférentiellement, l'enceinte 107 s'étend suivant une direction principale verticale.

La suite de la description est faite en référence à un seul tube, mais s'applique à l'ensemble des tubes de l'échangeur.

Chaque tube 1 s'étend suivant un axe longitudinal 3. Chaque tube 1 comprend à sa surface 11, correspondant à la surface externe du tube, une ailette hélicoïdale 2. L'ailette hélicoïdale 2 est une ailette qui est enroulée hélicoïdalement à la surface 11 du tube 1 suivant l'axe longitudinal du tube 1. Préférentiellement, chaque tube 1 comprend une ailette hélicoïdale 2. Selon une autre possibilité, chaque tube 1 comprend plusieurs ailettes hélicoïdales agencées en continuité ou discontinuité.

La forme hélicoïdale de l'ailette 2 contribue à faciliter les mouvements de convection du MCP 105 dans l'enceinte 107 est notamment autour des tubes 1. Plus précisément, l'ailette hélicoïdale facilite la formation à sa surface d'un canal continu de MCP liquide lui permettant de remonter et de s'étendre librement à la surface libre, limitant ainsi le risque d'exercer une contrainte mécanique importante sur l'échangeur lors de l'expansion volumique du MCP. De plus, la forme hélicoïdale de l'ailette radiale facilite la fabrication des tubes à ailettes.

L'ailette hélicoïdale 2 peut être soit extrudée, soit sertie dans une gorge, soit soudée, à haute fréquence ou laser par exemple, à la surface extérieure 11 du tube 1 suivant une hélicoïde.

Les tubes 1 sont avantageusement cylindriques. À titre d'exemple, les tubes 1 présentent un diamètre 6 généralement compris entre 17,2mm (DN10) et 60,3mm (DN50), le diamètre le plus courant étant de 33,7mm (DN25).

À titre d'exemple, les ailettes hélicoïdales 2 présentent un diamètre externe maximal 7 de 56mm. Le diamètre externe maximal 7 de l'ailette hélicoïdale 2 correspond à la somme du diamètre du tube 6 et de la hauteur de l'ailette 12 de l'ailette hélicoïdale 2.

Selon un mode de réalisation préféré, le tube 1 comprend au moins une extrémité d'insertion 4 par laquelle le tube 1 est introduit dans les ouvertures 52 des plaques 50. De manière avantageuse, le tube 1 comprend une portion 5 agencée à l'extrémité d'insertion 4 qui est dépourvue d'ailette. Cette portion est dénommée portion 5 d'extrémité d'insertion. La portion 5 d'extrémité d'insertion est par exemple lisse. La portion 5 d'extrémité d'insertion comprend uniquement le tube 1 et sa surface 11. La surface 11 du tube 1 peut être lisse ou bien par exemple rainurée pour faciliter l'accroche des ailettes sans pour autant être limitatif. Cette portion 5 d'extrémité d'insertion permet de faciliter l'introduction du tube 1 dans les ouvertures 52 de plaque 50. Selon une possibilité non représentée, le tube 1 comprend une portion d'extrémité opposée à l'extrémité d'insertion qui est également dépourvue d'ailette. Cette disposition permet avantageusement de faciliter l'adaptation de la dimension des tubes 1 aux dimensions de l'enceinte 107 en permettant une découpe facilitée des tubes 1. L'absence d'ailette aux extrémités des tubes permet également leur assemblage aux plaques collectrices de tubes ou aux nourrices de collecte ou de distribution hydrauliques.

Selon un premier mode de réalisation, l'ailette hélicoïdale 2 présente un diamètre externe maximal 7 constant sur l'ensemble du tube 1.

Selon un deuxième mode de réalisation, l'ailette hélicoïdale 2 présente un diamètre 7 décroissant avantageusement en direction de l'extrémité de l'ailette agencée au regard de l'extrémité d'insertion 4 du tube. Préférentiellement, le tube 1 comprend une portion de décroissance 8 dans laquelle le diamètre externe maximal 7 de l'ailette hélicoïdale 2 est décroissant en direction de l'extrémité d'insertion 4 du tube. Le diamètre externe maximal 7 de l'ailette hélicoïdale 2 diminue au fur et à mesure qu'elle se rapproche de cette extrémité d'insertion 4 du tube 1. Cette disposition permet de réduire le diamètre 57 de l'ouverture 52 dans les plaques 20 pour le passage du tube 1 et ainsi favoriser le centrage et le calage du tube 1.

À titre d'exemple, un tube 1 présente une longueur avant connexion au collecteur supérieur 100 et collecteur inférieur 102 comprise entre 1m et 6m, éventuellement la portion 5 d'insertion représente de 15 mm à 50 mm, éventuellement, la portion de décroissance représente de 20 mm à 50 mm.

L'ailette hélicoïdale 2 est avantageusement définie par son pas 9, sa hauteur 12, avantageusement l'épaisseur de l'ailette hélicoïdale 2 à sa base 14 et l'épaisseur de l'ailette hélicoïdale 2 à son sommet 15, l'épaisseur 17 de l'ailette hélicoïdale au niveau de son rayon d'insertion et éventuellement la longueur 13 de l'ailette hélicoïdale 2 et éventuellement la hauteur 16 séparant deux bases 14 successives de l'ailette hélicoïdale 2 suivant un axe vertical, plus précisément séparant la face supérieure de base de la face inférieure de la base suivante. Le pas 9 de l'ailette hélicoïdale 2 est choisi en fonction des plaques 50 et notamment les reliefs 51 décrits ci-après. Le pas 9 s'entend comme la distance entre 2 sommets successifs de l'ailette hélicoïdale 2 suivant un axe vertical. La hauteur 12 de l'ailette s'entend comme la distance entre le sommet 15 et la base 16 de l'ailette hélicoïdale 2, correspondant à la surface 11 du tube 1.

À titre d'exemple, le pas 9 est défini de sorte à avoir un nombre d'aillettes/ mètre compris entre 196 ailettes/mètre et 473 ailettes/mètre, c'est-à-dire que le pas 9 est compris entre 20mm et 55mm, plus précisément entre 21mm et 51mm. Le pas 9 de l'ailette hélicoïdale 2 est choisi de sorte que l'ailette hélicoïdale 2 soit en contact avec les plaques 50 et avantageusement assure un contact plan 10 entre une surface de la plaque 50 et une surface de l'ailette hélicoïdale 2. Ce contact plan 10 entre la plaque 50 et l'ailette hélicoïdale 2 est optimisée pour permettre la conduction thermique entre le fluide caloporteur 103 et le MCP 105 en passant par les plaques 50, l'ailette hélicoïdale 2 et le tube 1. Préférentiellement, ce contact plan 10 se fait sur au moins une partie de la hauteur 12 d'ailette correspondant à la moitié de la différence entre le diamètre externe maximal 7 de l'ailette hélicoïdale et le diamètre 57 de l'ouverture 52. Ce contact plan 10 présente avantageusement au moins 25% de la hauteur 12 de l'ailette hélicoïdale, préférentiellement au moins 50%.

L'ailette hélicoïdale 2 peut soit présenter une épaisseur décroissante de sa base 14 à son sommet 15, soit présenter une épaisseur constante de sa base 14 à son sommet 15.

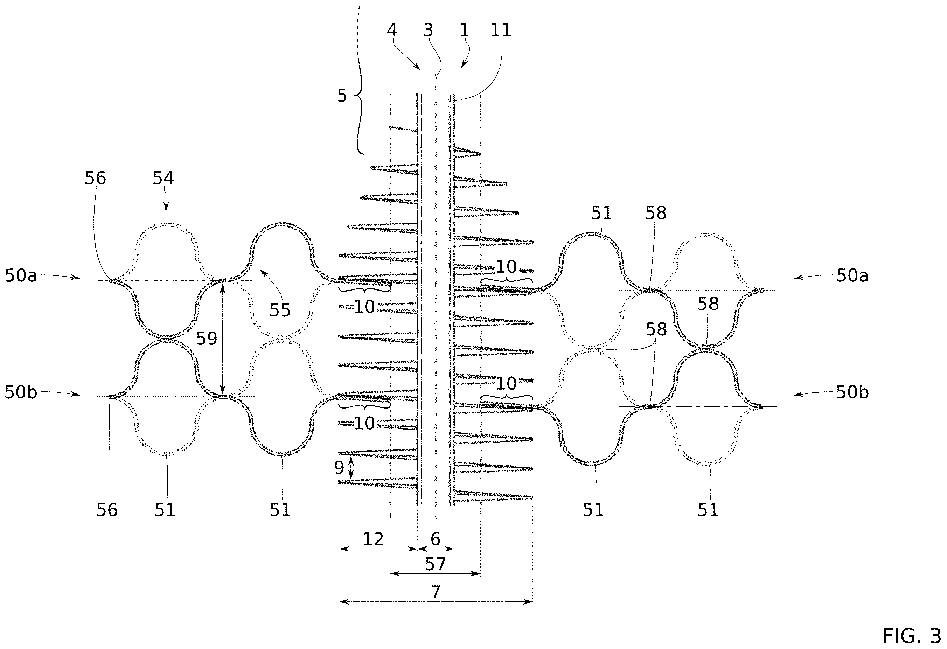

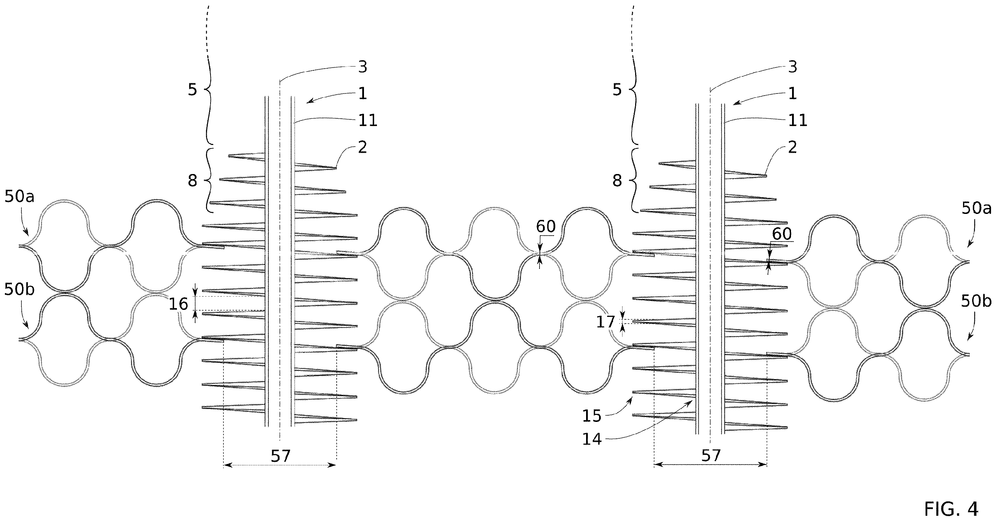

Selon une possibilité préférée, notamment illustrée aux figures 3 et 4, l'ailette hélicoïdale 2 et les plaques 50 sont configurées pour que l'ailette hélicoïdale 2 vienne en contact avec la plaque 50 alternativement par la première face 54 et la deuxième face 55 de la plaque 50. Cette disposition est notamment permise par le vissage du tube 1 sur la plaque 50. Le tube 1 est en contact continu avec la plaque 50 par l'intermédiaire de l'ailette hélicoïdale 2. Il n'est pas possible d'avoir un jeu entre l'ailette hélicoïdale 2 et la plaque 50 contrairement à ce qui arrive avec les inserts sur les tubes de l'état de la technique.

Selon une possibilité, le tube 1 comprend à son extrémité d'insertion 4 une empreinte, non représentée sur les figures, configurée pour coopérer avec un outil d'entraînement pour le vissage du tube 1 dans les ouvertures 52 des plaques 50. Par exemple, une empreinte cannelée, hexagonale, ou autre peut être prévu à l'extrémité d'insertion 4. Avantageusement, cette empreinte est retirée pour permettre un ajustement du tube 1 aux dimensions de l'enceinte 107 et faciliter l'assemblage du tube 1 à ses extrémités au collecteur supérieur 101 et au collecteur inférieur 102.

Avantageusement, l'ensemble des tubes 1 d'un faisceau de tubes du SST 100 sont identiques. Il peut toutefois être prévu que des tubes 1 du faisceau de tubes soient différents en structures, dimensions, forme etc.

Le SST 100 selon l'invention comprend des plaques 52 faisant avantageusement partie de l'échangeur dans le sens où elles participent à l'échange thermique entre le MCP 105 et le fluide caloporteur 103.

Selon un mode de réalisation préféré, les plaques 50 sont préférentiellement disposées perpendiculairement aux tubes 1. Préférentiellement, les tubes 1 sont parallèles entre eux et les plaques 50 sont parallèles entre elles.

Selon l'invention, les plaques 50 comprennent des ouvertures 52 pour tubes 1. Les ouvertures 52 sont réalisées avec enlèvement de matière préférentiellement par prédécoupage puis emboutissage. Les ouvertures 52 sont configurées pour recevoir les tubes 1. Chaque ouverture 52 reçoit un tube 1. L'ouverture 52 est de forme complémentaire à celle du tube 1 et avantageusement de celle de l'ailette hélicoïdale.

De manière avantageuse, l'ouverture 52 présente un diamètre 57 inférieur au diamètre maximal 7 de l'ailette hélicoïdale 2. Avantageusement, le diamètre 57 de l'ouverture est supérieur ou égal au diamètre 6 du tube 1. De cette manière, le tube 1 peut être introduit dans l'ouverture 52 et l'ailette hélicoïdale 2 est en contact avec l'ouverture 52 pour permettre avantageusement l'insertion par vissage et préférentiellement en contact entre l'ailette hélicoïdale 2 et la plaque 50.

Selon une possibilité, chaque ouverture 52 comprend au moins une fente 61 configurée pour laisser passer l'ailette hélicoïdale 2 du tube 1 dans l'ouverture de la plaque 52 lors de son insertion.

La fente 61 s'étend avantageusement depuis le pourtour de l'ouverture 52. A titre d'exemple, la fente 61 s'étend suivant une composante principale parallèle au rayon de l'ouverture 52. La fente 61 peut être inclinée par rapport au rayon de l'ouverture 52.

La fente 61 est définie notamment par sa profondeur 62 correspondant à la distance séparant la base de la fente 61 au niveau du pourtour de l'ouverture 52 et le sommet de la fente, opposée à sa base. La profondeur 62 de la fente 61 est avantageusement configurée pour laisser passer l'ailette hélicoïdale 2 et plus précisément la profondeur 62 est au moins égale à la moitié de la différence entre le diamètre externe maximal 7 de l'ailette hélicoïdale 2 et le diamètre 57 de l'ouverture 52. Cette disposition permet d'avoir l'axe longitudinal 3 du tube 1 centré dans l'ouverture 52.

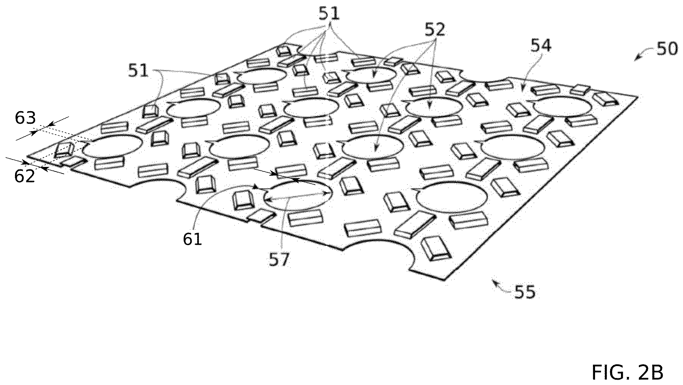

La fente 61 peut être de forme rectangulaire ou bien triangulaire comme illustrée sur la figure 2B. La fente 61 est avantageusement de forme complémentaire de celle de l'ailette hélicoïdale 2. Si l'ailette hélicoïdale présente une épaisseur constante de sa base 14 à son sommet15, la fente 61 sera préférentiellement de forme rectangulaire, tandis que si l'ailette hélicoïdale 2 présente une épaisseur décroissante de sa base 14 à son sommet15, la fente 61 sera préférentiellement de forme triangulaire. La fente 61 présente avantageusement une largeur au moins égale à l'épaisseur 17 de l'ailette hélicoïdale au niveau de son rayon d'insertion. Le rayon d'insertion de l'ailette hélicoïdale 2 correspond, préférentiellement à la moitié du diamètre 57 de l'ouverture 52. Cette disposition permet de faciliter l'insertion du tube 1 et de l'ailette 2 dans l'ouverture 52 sans décentrer le tube 1.

Selon une possibilité, les bords de la fente 61 peuvent être décalés, c'est-à-dire agencé au moins en partie sur un plan longitudinal de la plaque différent. Les deux bords de la fente 61 peuvent décalés en hauteur de sorte à faciliter l'insertion de l'ailette hélicoïdale.

Préférentiellement, la plaque 50 présente une épaisseur 60. L'épaisseur 60 de la plaque préférentiellement au niveau de l'ouverture 52 est en adéquation avec le pas 9 de l'ailette hélicoïdale 2 et plus préférentiellement avec la hauteur 16 séparant deux bases 14 successives de l'ailette hélicoïdale 2.

Préférentiellement, les plaques 50 ont une forme correspondante à la forme de l'intérieur de l'enceinte 107. Les plaques 50 sont configurées pour être avantageusement empilées dans l'enceinte 107 du SST 100. À titre d'exemple, les plaques 50 sont de forme circulaire ou hexagonale. Les plaques 50 forment avantageusement une cassette de plaques, c'est-à-dire un ensemble de plaques.

Chaque plaque 50 s'étend suivant un plan de plaque 56 suivant une direction longitudinale, avantageusement perpendiculaire à l'axe longitudinal 3 des tubes 1.

Selon un mode de réalisation, les plaques 50 ou au moins certaines plaques, par exemple une plaque sur deux en alternance, comprennent des reliefs 51. À titre d'exemple, les reliefs 51 sont formés par déformation plastique des plaques 50 formant des plaques 50 dites matricées.

À titre préféré, les reliefs 51 sont configurés pour faire office d'espaceurs de plaques 50. Avantageusement, dans le SST 100 selon l'invention, les plaques 50 sont empilées en contact les unes des autres, préférentiellement au moins partiellement par leurs reliefs 51. Un relief 51 peut être en contact d'un autre relief 51 opposé formé sur une plaque sur ou sous-jacente ou bien en contact de la plaque 50 elle-même.

Les reliefs 51 permettent aux plaques 50 d'être superposées en contact les unes des autres. Les plaques 50 sont empilées et reposent les unes sur les autres par des zones de contact 58. Selon l'invention, il n'est pas nécessaire pour assurer la superposition des plaques 2 de prévoir des moyens de fixation des plaques 2 sur les tubes 1.

Les reliefs 51 ont une fonction d'espaceurs des plaques 2. Les reliefs permettent de maintenir un espace entre deux plaques 2 juxtaposées. En effet, les plaques 2 sont espacées les unes des autres d'au moins la hauteur des reliefs 51 d'une plaque 50, voire de la somme de la hauteur des reliefs de 2 plaques 50 successives illustrant l'espacement 59 entre les plaques.

Avantageusement, les plaques 50 comprennent une première face 54 et une deuxième face 55 opposée. Les reliefs 51 sont préférentiellement formés sur au moins l'une des deux faces 54-55 des plaques. On entend ainsi que les reliefs font saillie sur au moins l'une des deux faces 54-55. Selon une possibilité illustrée aux figures 3 et 4, les reliefs 51 font saillie sur les deux faces 54 et 55. Selon une possibilité illustrée notamment figure, les plaques 50 comprennent des reliefs 51 et avantageusement des portions planes espaçant les reliefs.

Les reliefs 51 peuvent prendre des formes très variées telles que des saillies ponctuelles ou bien des reliefs longitudinaux s'étendant d'un bord à l'autre d'une plaque 2, par exemple des nervures, ou des ondulations comme illustrées aux figures 3 et 4. Les reliefs 51 peuvent former un réseau suivant un motif récurrent alternant par exemple un relief 51 orienté vers la première face 54 de la plaque 50, dit relief supérieur, et un relief 51 orienté vers la deuxième face 55 de la plaque 50, dit relief inférieur. Préférentiellement, les nervures s'étendent d'un côté à l'autre de la plaque 2. Les reliefs 51 s'étendent suivant une direction principale perpendiculaire au plan plaque 56 depuis lequel ils s'étendent. Les reliefs 51 peuvent être des nervures de forme parallélépipédique ou de forme arrondie.

Préférentiellement, les reliefs 51 sont configurés pour générer une zone de contact 59 entre deux plaques 50a et 50b juxtaposées. La zone de contact 59 est avantageusement une zone de contact plan. À titre d'exemple, l'empilement des plaques 50 permet la mise en contact de certains de leurs reliefs 51, par exemple les reliefs inférieurs d'une plaque 50a du dessus sont en contact avec les reliefs supérieurs de la plaque 50b située en dessous.

Avantageusement, les reliefs 51 sont formés par emboutissage de la plaque 50, ils peuvent également être obtenus par d'autres types d'usinages mécanique (modelage, matriçage, procédé Guérin, ou gravure pour les plus petits reliefs) ou laser. Préférentiellement, les reliefs 51 sont formés par déformation de la plaque 50 et non pas par rajout de matière sur la plaque 50. Les reliefs 51 et la plaque 50 sont solidaires. Les reliefs 51 et la face 54 ou 55 de la plaque 50 forment une pièce monolithique afin d'optimiser les transferts thermiques.

La forme des reliefs doit être choisie pour assurer une fonction mécanique et une fonction thermique. Mécanique, car les reliefs permettent aux plaques 50 de reposer les unes sur les autres assurant ainsi leur espacement 59 et avantageusement de maintenir la structure globale. En effet, les reliefs 51 et donc l'espacement 59 généré par ceux-ci doivent être compatibles avec le pas 9 de l'ailette hélicoïdale 2 du tube 1. Les plaques 50 et les tubes 1 sont en contact physique et thermique. Le poids des plaques 50 repose ainsi à la fois sur les ailettes hélicoïdales 2 et sur elles-mêmes grâce aux reliefs 51. Thermique, car les reliefs 51 augmentent la surface d'échange et améliorent les transferts thermiques dans la direction orthogonale aux plaques 50 : en effet, les plaques 50 étant en contact les unes avec les autres selon la direction verticale, avantageusement par les zones de contact 59, elles favorisent les transferts thermiques conducteurs dans cette direction.

Par ailleurs, les plaques 50 s'étendent avantageusement sur toute la surface transversale de l'enceinte 107 par conséquent il n'y a pas de zones mortes, c'est-à-dire des zones éloignées des plaques 50, comme il peut en exister avec des tubes à ailettes de l'état de la technique ou avec des inserts de l'état de la technique.

L'ensemble des plaques 50 forme une cassette de plaques structurée en 3 dimensions également appelée cassette de plaques matricée.

À titre d'exemple, les reliefs 51 ont une épaisseur minimum de 8mm et maximum de 10 cm, plus préférentiellement comprise entre 2 et 5 cm. L'épaisseur des reliefs est à réajuster en fonction du nombre de tubes au mètre carré et à la puissance voulue.

Des plaques 50 de différentes géométries peuvent être empilées dans un même échangeur. Les plaques 50 peuvent être empilées les unes sur les autres de différentes manières par exemple avec les nervures d'une plaque 50 parallèles aux nervures des plaques 50 empilées de part et d'autre ou bien avec des nervures d'une plaque 50 perpendiculaires aux nervures des autres plaques 50 empilées de part et d'autre. Selon une possibilité non représentée, l'empilement comprend des plaques 50 possédant un relief et des plaques planes sans relief. Les plaques 50 possédant des reliefs 51, ont des reliefs 51 s'étendant depuis les deux faces 54, 55 de la plaque 50. Ainsi, l'empilement comprend successivement une plaque 50 à relief, puis une plaque plane puis une plaque 50 à relief... Avantageusement, les plaques 50 sont empilées par gravité.

Selon un mode de réalisation privilégié, les plaques 50 sont ajourées et préférentiellement sans enlèvement de matière.

À titre d'exemple, les plaques 50 comprennent des perforations. Les plaques 50 sont perforées avantageusement sans enlèvement de matière telle qu'illustré aux figures 2A et 2B.

À titre d'exemple, les reliefs 51 sont ajourés.

Selon une possibilité, les jours sont formés dans la plaque 50 mécaniquement par des opérations de poinçonnage ou de cisaillage.

Sur les figures 3 et 4, les perforations ou jours ne sont pas illustrés pour simplifier les dessins.

Les plaques 50 sont préférentiellement gaufrées découpées, ou même en métal déployé.

Les perforations permettent le passage du MCP liquide : elles ne bloquent pas les transferts convectifs et préviennent les contraintes mécaniques engendrées par l'expansion volumique du MCP lors de son changement d'état, en permettant la mise en place de voies fluides. Préférentiellement, les perforations se font sans enlèvement de matière afin d'optimiser les transferts thermiques en maximisant la surface d'échange de l'échangeur 3.

Selon une possibilité, les plaques 50 sont solidarisées aux tubes 1 et/ou aux ailettes hélicoïdales 2 par exemple par brassage.

L'invention concerne également un procédé d'assemblage du SST 100 décrit ci-dessus. Le procédé comprend une étape d'empilement des plaques 50 les unes aux dessus des autres, avantageusement en contact en maintenant un espace entre deux plaques 50 juxtaposées grâce aux reliefs 51. Les plaques 50 sont empilées de sorte que les ouvertures 52 pour tubes 1 soient alignées. Préférentiellement, l'alignement des ouvertures 52 peut être réalisé à l'aide de guides de montage, qui sont préférentiellement des barres métalliques de même diamètre que les tubes 1. L'empilement se fait avantageusement par gravité. Les plaques 50 reposent les unes sur les autres. Les tubes 1 sont ensuite introduits dans les ouvertures 52 des plaques 50. Avantageusement, les tubes 1 sont introduits dans les ouvertures 52 des plaques 50 par vissage de l'ailette hélicoïdale 2 sur l'ouverture 52.

Avantageusement, le procédé comprend ensuite la connexion des extrémités des tubes 1 au réseau fluidique de fluide caloporteur 103. Les extrémités des tubes 1 sont connectées respectivement au collecteur supérieur 101 et collecteur inférieur 102.

Selon une possibilité, avant la connexion des extrémités des tubes au réseau fluidique de fluide caloporteur 103, les tubes 1 sont mis aux dimensions de l'enceinte et/ou l'empreinte est supprimée et/ou la portion 5 d'extrémité d'insertion est supprimée.

Avantageusement, le procédé comprend ensuite la mise en place dans l'enceinte 107 de l'échangeur thermique formé des tubes 1 à ailettes hélicoïdales 2 et des plaques 50 formant la cassette de plaques.

## LISTE DE REFERENCES

1. Tube
2. Ailette
3. Axe longitudinal du tube
4. Extrémité d'insertion
5. Portion extrémité
6. Diamètre externe du tube
7. Diamètre externe maximal de l'ailette
8. Portion de décroissance
9. Pas de l'ailette hélicoïdale
10. Surface de contact entre la plaque et l'ailette hélicoïdale
11. Surface externe du tube
12. Hauteur de l'ailette hélicoïdale
13. Longueur ailette hélicoïdale
14. Base de l'ailette hélicoïdale
15. Sommet de l'ailette hélicoïdale
16. Hauteur séparant deux bases successives de l'ailette hélicoïdale
17. Epaisseur de l'ailette hélicoïdale au niveau du rayon d'insertion

50. Plaque
50 a. Première plaque
50 b. Deuxième plaque
51. Relief
52. Ouverture
54. Première face
55. Deuxième face
56. Plan de plaque
57. Diamètre de l'ouverture
58. Zone de contact entre les plaques
59. Espacement entre les plaques
60. Epaisseur de la plaque
61. Fente
62. Profondeur de la fente
63. Largeur de la fente
100. SST
101. Collecteur supérieur
102. Collecteur inférieur
103. Fluide caloporteur
104. Ciel de gaz
105. MCP
106. Axe longitudinal de l'enceinte
107. Enceinte

**Revendications**

1. Système de stockage thermique (SST) par matériau à changement de phase (MCP) comprenant une enceinte (107) destinée à contenir un MCP (105) et un échangeur thermique à fluide caloporteur agencé au moins partiellement dans l'enceinte (107) en contact du MCP (105), l'échangeur thermique comprenant un faisceau de tubes (1) parallèles destinés à recevoir un fluide caloporteur, le système étant **caractérisé en ce que** chaque tube (1) comprend à sa surface (11) au moins une ailette hélicoïdale (2) enroulée hélicoïdalement suivant un axe longitudinal (3) suivant lequel s'étend le tube (1), le système comprenant des plaques (50) comprenant chacune pour chaque tube (1) une ouverture (52) au travers de laquelle est disposé un tube (1), et **en ce que** le diamètre (57) des ouvertures (52) est inférieur au diamètre externe maximal (7) de l'ailette hélicoïdale (2).

2. SST selon la revendication précédente dans lequel l'ailette hélicoïdale (2) est, au moins en partie, en contact avec au moins une plaque (50).

3. SST selon l'une quelconque des revendications précédentes dans lequel les plaques (50) comprennent des reliefs (51) faisant saillie au-dessus et/ou en-dessous d'un plan de plaque (56) s'étendant suivant une direction longitudinale d'extension des plaques.

4. SST selon la revendication précédente dans lequel les plaques (50) sont empilées les unes sur les autres avec les ouvertures (52) alignées les unes aux autres pour former une cassette de plaques et les reliefs (51) sont configurés pour faire office d'espaceurs de plaques permettant aux plaques (50) d'être empilées les unes sur les autres en contact en maintenant entre deux plaques (50) juxtaposées un espace (59).

5. SST selon l'une quelconque des revendications précédentes dans lequel les plaques (50) s'étendant suivant une même direction longitudinale oblique, préférentiellement perpendiculaire, à l'axe longitudinal (3) des tubes (1).

6. SST selon l'une quelconque des revendications précédentes dans lequel les ouvertures (52) comprennent une fente (61) configurée pour laisser passer l'ailette hélicoïdale (2) du tube (1) dans l'ouverture (52) de la plaque (50).

7. SST selon la revendication précédente dans lequel la fente (61) présente une profondeur (62) au moins égale à la moitié de la différence entre le diamètre externe maximal (7) de l'ailette hélicoïdale (2) et le diamètre (57) de l'ouverture (52).

8. SST selon l'une quelconque des deux revendications précédentes dans lequel la fente (61) présente une largeur (63) au moins égale à l'épaisseur (17) de l'ailette hélicoïdale (2) au regard du pourtour de l'ouverture (52).

9. SST selon l'une quelconque des revendications précédentes dans lequel les tubes (1) du faisceau de tubes comprennent au moins une portion d'extrémité (5) par laquelle le tube est introduit dans les ouvertures (52) des plaques (50) et qui est dépourvue d'ailette hélicoïdale (2).

10. SST selon l'une quelconque des revendications précédentes dans lequel l'ailette hélicoïdale (2) présente un diamètre externe maximal (7) décroissant en direction de son extrémité agencée à une extrémité d'insertion (4) du tube (1) par laquelle le tube (1) est introduit dans les ouvertures (52) des plaques (50).

11. SST selon l'une quelconque des revendications précédentes dans lequel le diamètre (57) des ouvertures (52) est au moins égal ou supérieur au diamètre externe (6) des tubes (1).

12. SST selon l'une quelconque des revendications précédentes dans lequel la plaque (50) présente une épaisseur (60) inférieure ou égale au pas (9) de l'ailette hélicoïdale (2).

13. SST selon l'une quelconque des revendications précédentes dans lequel les tubes (1) du faisceau de tubes comprennent à une extrémité d'insertion (4) du tube (1) par laquelle le tube (1) est introduit dans les ouvertures (52) des plaques (50), une empreinte destinée à coopérer avec un outil d'entrainement pour le vissage des tubes dans les ouvertures (52) des plaques (50) et configurée pour être supprimée après que le tube (1) ait été vissé dans les plaques (50).

14. SST selon l'une quelconque des revendications précédentes dans lequel les plaques (52) sont ajourées.

15. Procédé d'assemblage d'un SST selon l'une quelconque des revendications précédentes comprenant les étapes successives suivantes:

   • empilement des plaques (50) les unes sur les autres en alignant les ouvertures (52) pour former une cassette de plaques,
   • insertion par vissage des tubes (1) dans les ouvertures (52) des plaques (50)
   • assemblage des extrémités des tubes (1) à des collecteurs (102, 103)
   • mise dans l'enceinte (107) de l'échangeur thermique.


**Patentansprüche**

1. Wärmespeichersystem (SST) durch Phasenwechselmaterial (MCP), das einen Einschluss (107) umfasst, der dazu bestimmt ist, ein MCP (105) zu enthalten, und einen Wärmetauscher mit Kühlmittel, der mindestens teilweise in dem Einschluss (107) in Kontakt mit dem MCP (105) eingerichtet ist, wobei der Wärmetauscher ein Bündel paralleler Rohre (1) umfasst, die dazu bestimmt sind, ein Kühlmittel aufzunehmen, wobei das System **dadurch gekennzeichnet ist, dass** jedes Rohr (1) an seiner Oberfläche (11) mindestens eine spiralförmige Rippe (2) umfasst, die gemäß einer Längsachse (3), gemäß der sich das Rohr (1) erstreckt, aufgewickelt ist, wobei das System Platten (50) umfasst, die jeweils für jedes Rohr (1) eine Öffnung (52) umfassen, durch die ein Rohr (1) angeordnet ist, und dass der Durchmesser (57) der Öffnungen (52) kleiner ist als der maximale Außendurchmesser (7) der spiralförmigen Rippe (2).

2. SST nach dem vorstehenden Anspruch, wobei die spiralförmige Rippe (2) mindestens zum Teil mit mindestens einer Platte (50) in Kontakt steht.

3. SST nach einem der vorstehenden Ansprüche, wobei die Platten (50) Reliefs (51) umfassen, die oberhalb und/oder unterhalb einer Plattenebene (56), die sich gemäß einer Längsausdehnungsrichtung der Platten erstreckt, vorragen.

4. SST nach dem vorstehenden Anspruch, wobei die Platten (50) aufeinander mit den Öffnungen (52) miteinander ausgerichtet gestapelt sind, um eine Plattenkassette zu bilden, und die Reliefs (51) dazu konfiguriert sind, als Abstandshalter von Platten zu dienen, die es den Platten (50) erlauben, aufeinander in Kontakt unter Beibehalten eines Raums (59) zwischen zwei nebeneinander liegenden Platten (50) gestapelt zu werden.

5. SST nach einem der vorstehenden Ansprüche, wobei sich die Platten (50) gemäß einer gleichen schrägen, bevorzugt zu der Längsachse (3) der Rohre (1) senkrechten Längsrichtung erstrecken.

6. SST nach einem der vorstehenden Ansprüche, wobei die Öffnungen (52) einen Schlitz (61) umfassen, der dazu konfiguriert ist, die spiralförmige Rippe (2) des Rohrs (1) durch die Öffnung (52) der Platte (50) durchgehen zu lassen.

7. SST nach dem vorstehenden Anspruch, wobei der Schlitz (61) eine Tiefe (62) aufweist, die mindestens gleich der Hälfte der Differenz zwischen dem maximalen Außendurchmesser (7) der spiralförmigen Rippe (2) und dem Durchmesser (57) der Öffnung (52) ist.

8. SST nach einem der zwei vorstehenden Ansprüche, wobei der Schlitz (61) eine Breite (63) aufweist, die mindestens der Dicke (17) der spiralförmigen Rippe (2) in Bezug auf den Umfang der Öffnung (52) entspricht.

9. SST nach einem der vorstehenden Ansprüche, wobei die Rohre (1) des Bündels von Rohren mindestens einen Endabschnitt (5) umfassen, durch den das Rohr in die Öffnungen (52) der Platten (50) eingeführt wird und der keine spiralförmige Rippe (2) aufweist.

10. SST nach einem der vorstehenden Ansprüche, wobei die spiralförmige Rippe (2) einen maximalen Außendurchmesser (7) aufweist, der in Richtung ihres Endes, das an einem Einsetzende (4) des Rohrs (1), durch das das Rohr (1) in die Öffnungen (52) der Platten (50) eingeführt wird, abnimmt.

11. SST nach einem der vorstehenden Ansprüche, wobei der Durchmesser (57) der Öffnungen (52) mindestens gleich oder größer als der Außendurchmesser (6) der Rohre (1) ist.

12. SST nach einem der vorstehenden Ansprüche, wobei die Platte (50) eine Dicke (60) kleiner oder gleich der Steigung (9) der spiralförmigen Rippe (2) aufweist.

**13.** SST nach einem der vorstehenden Ansprüche, wobei die Rohre (1) des Rohrbündels an einem Einsetzende (4) des Rohrs (1), durch das das Rohr (1) in die Öffnungen (52) der Platten (50) eingeführt wird, eine Prägung umfassen, die dazu bestimmt ist, mit einem Antriebswerkzeug für das Einschrauben der Rohre in die Öffnungen (52) der Platten (50) zusammenzuwirken, und dazu konfiguriert ist, entfernt zu werden, nachdem das Rohr (1) in die Platten (50) geschraubt wurde.

**14.** SST nach einem der vorstehenden Ansprüche, wobei die Platten (52) gelocht sind.

**15.** Verfahren zum Zusammenfügen eines SST nach einem der vorstehenden Ansprüche, das die folgenden sukzessiven Schritte umfasst:

    • Aufeinanderstapeln der Platten (50) unter Ausrichten der Öffnungen (52), um eine Plattenkassette zu bilden,
    • Einsetzen durch Einschrauben der Rohre (1) in die Öffnungen (52) der Platten (50)
    • Zusammenfügen der Enden der Rohre (1) mit Sammlern (102, 103)
    • Einbringen des Wärmetauschers in den Einschluss (107).

**Claims**

**1.** Phase change material (PCM) heat storage system (HSS) comprising a chamber (107) intended to contain a PCM (105) and a heat-transfer fluid heat exchanger arranged at least partially in the chamber (107) in contact with the PCM (105), the heat exchanger comprising a tube (1) bundle parallel to one another, intended to receive a heat-transfer fluid, the system being **characterised in that** each tube (1) comprises, on its surface (11), at least one helical vane (2) wound helically along a longitudinal axis (3) along which the tube (1) extends, the system comprising plates (50), each comprising for each tube (1), an opening (52) through which a tube (1) is disposed, and **in that** the diameter (57) of the openings (52) is less than the maximum external diameter (7) of the helical vane (2).

**2.** HSS according to the preceding claim, wherein the helical vane (2) is, at least partially, in contact with at least one plate (50).

**3.** HSS according to any one of the preceding claims, wherein the plates (50) comprise raised elements (51) projecting above and/or below a plate plane (56) extending along an extension longitudinal direction of the plates.

**4.** HSS according to the preceding claim, wherein the plates (50) are stacked on one another with the openings (52) aligned with one another to form a plate cassette and the raised elements (51) are configured to act as plate spacers enabling the plates (50) to be stacked on one another in contact, by maintaining a space (59) between two juxtaposed plates (50).

**5.** HSS according to any one of the preceding claims, wherein the plates (50) extending along one same oblique longitudinal direction, preferably perpendicularly, to the longitudinal axis (3) of the tubes (1).

**6.** HSS according to any one of the preceding claims, wherein the openings (52) comprising a slot (61) configured to let the helical vane (2) pass from the tube (1) into the opening (52) of the plate (50).

**7.** HSS according to the preceding claim, wherein the slot (61) has a depth (62) at least equal to half the different between the maximum external diameter (7) of the helical vane (2) and the diameter (57) of the opening (52).

**8.** HSS according to any one of the two preceding claims, wherein the slot (61) has a width (63) at least equal to the thickness (17) of the helical vane (2) facing the perimeter of the opening (52).

**9.** HSS according to any one of the preceding claims, wherein the tubes (1) of the tube bundle comprise at least one end portion (5) through which the tube is introduced into the openings (52) of the plates (50), and which has no helical vane (2).

**10.** HSS according to any one of the preceding claims, wherein the helical vane (2) has a maximum external diameter (7) decreasing in the direction of its end arranged at an insertion end (4) of the tube (1) through which the tube (1) is introduced into the openings (52) of the plates (50).

**11.** HSS according to any one of the preceding claims, wherein the diameter (57) of the openings (52) is at least equal to or greater than the external diameter (6) of the tubes (1).

**12.** HSS according to any one of the preceding claims, wherein the plate (50) has a thickness (60) less than or equal to the pitch (9) of the helical vane (2).

**13.** HSS according to any one of the preceding claims, wherein the tubes (1) of the tube bundle comprise, at an insertion end (4) of the tube (1) through which the tube (1) is introduced into the openings (52) of the plates (50), an imprint intended to engage with a drive tool for screwing the tubes into the openings (52) of the plates (50), and configured to be removed after the tube (1) has been screwed into the plates (50).

**14.** HSS according to any one of the preceding claims, wherein the plates (52) are perforated.

**15.** Method for assembling an HSS according to any one of the preceding claims, comprising the following successive steps:

> • stack of plates (50) on one another by aligning the openings (52) to form a plate cassette,
> • insertion by screwing the tubes (1) into the openings (52) of the plates (50)
> • assembling the ends of the tubes (1) to collectors (102, 103)
> • put into the chamber (107) of the heat exchanger.

FIG. 1

FIG. 2A

FIG. 2B

FIG. 3

FIG. 4

17

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3274642 A